# EUROPEAN PATENT APPLICATION

(11) **EP 1 868 356 A1**
(43) Date of publication of application: **19.12.2007**
(21) Application number: 07109163.1
(22) Date of filing: 30.05.2007
(51) Int. Cl.: H04M 1/02

(54) **An electronic communication device with a dynamic multifunctional module**

(30) Priority: 15.06.2006 US 424276
(71) Applicant: Nokia Corporation, 02150 Espoo (FI)
(72) Inventor: Määttä, Esa-Sakari, FI-37830, Viiala (FI)
(74) Representative: Tanhua, Pekka Vilhelm

(57) **Abstract**

The invention relates to a dynamic multifunctional module (415) and to an electronic communication device comprising a main body part (202), a sliding body part (203), said parts being connected together with sliding contact, and a dynamic multifunctional module (415), the dynamic multifunctional module being joint from one edge to the main body (210) part with an articulation and in linked connection to sliding body part and the dynamic multifunctional module being in a first position when the said sliding body part is in closed position and turned by an angle around the articulation to a second position by the sliding body part when the sliding body part is moved to open position (FIG 2A,2B). The invention also includes a method for changing an image capturing direction of an electronic communication device (206).

## Description

### TECHNICAL FIELD

The present invention relates to a dynamic multifunctional module and an electronic communication device having said dynamic multifunctional module. The invention also relates to a method for changing an image capturing direction of an electronic communication device.

### BACKGROUND OF THE INVENTION

In the mobile phone industry there is call for manufacturing slimmer mobile phones. One of the most restricting parts for slimmer mobile phone is a camera. Especially when the mobile phone has a sliding cover part and a camera the phone tends to be very thick (more than 15 mm) compared for example to one piece mobile phone solutions. This is due to the fact that when all necessary parts for the camera and display are stacked together on top of each other (the way this is done in prior art phones) and when the mobile phone also have a sliding mechanism there is no possibility to make very slim mobile phones. The only possibility left with prior art mobile phones is to design new parts for the camera module and the display module which themselves are slimmer.

### SUMMARY OF THE INVENTION

The present invention provides a slim electronic communication device with an image capturing device and a sliding cover part using prior art modules for the display unit and an image capturing device. This is achieved with a dynamic multifunctional module situated at one end of the mobile phone. This dynamic multifunctional module can include one or more of the following features: an image capturing device, an antenna and audio components such as speakers, audio chambers and/or speaker grills. The idea of the invention is to manufacture a slimmer mobile phone with sliding cover part and an image capturing device. The object is achieved with the dynamic multifunctional module which is in a first position when the slider phone is in a closed position and when the sliding cover of the phone is opened the sliding cover moves at the same time the dynamic multifunctional module into the second position. The movement from the first position to the second position is done around an articulation situated between the dynamic multifunctional module and mobile phone's main body part. By this arrangement there is no need to stack the camera module and the display module on top of each other. This means that the thickness of the phone is mainly characterized by the thickness of the camera module not by the sum of the display module's thickness and the camera module's thickness. The invention also enables to manufacture a slim electronic communication device with a camera having an optical zoom.

Another aspect of the invention is to provide a new method for changing an image capturing direction of an electronic communication device.

### BRIEF DESCRIPTION OF DRAWINGS

In the following the invention is described more specifically with reference to the accompanying drawings in which:
Fig. 1 is a prior art mobile phone;
Figs. 2 a-b are presenting a first embodiment of an electronic communication device according to the present invention;
Figs. 3 a-b are presenting a second embodiment of an electronic communication device according to the present invention;
Fig. 4 is a more accurate drawing of the dynamic multifunctional module of an embodiment presented in Figs. 2 a-b;
Fig. 5 is a more accurate drawing of the dynamic multifunctional module of an embodiment presented in Figs. 3 a-b.

### DETAILED DESCRIPTION OF THE INVENTION

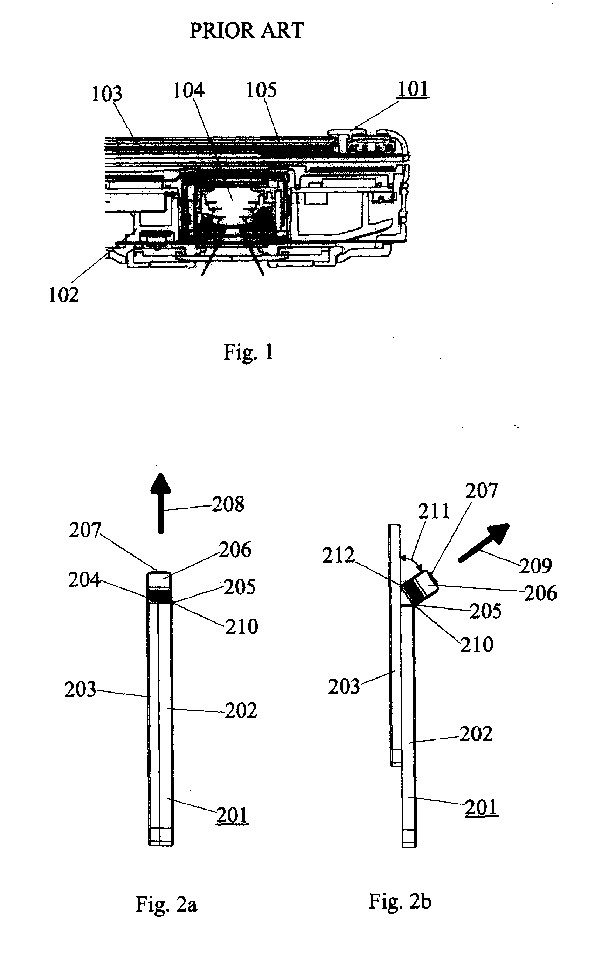

In Fig. 1 is described a prior art mobile phone 101. The mobile phone 101 has two main parts, a main body part 102 and a sliding cover part 103, which are connected together with a sliding connection. The main body part 102 includes among other components a camera module 104 and the sliding cover part 103 includes among other components a display module 105. The camera module 104 can normally be operated in both cover part 103 positions meaning that the sliding cover part 103 can be either open or closed. With this arrangement the user can for example choose between portrait or landscape mode for the camera depending on the manufacturer's design. When these two main parts 102 and 103 are stacked together on top of each other with all necessary components (a camera module 104 and a display module 105) the thickness of the slider mobile phone 101 becomes inevitably too great in this direction for a sophisticated looking slider mobile phone with a camera.

In Figs. 2 a-b is presented an electronic communication device 201 according to the first embodiment of the present invention having a main body part 202 and a sliding cover part 203. To the top end 204 main body part 202 of the electronic communication device 201 is connected with a hinge 205 a dynamic multifunctional module 206. In other words, the module is joined from one edge to the main body part with an articulation or with articulation means. This dynamic multifunctional module 206 includes a camera module (image capturing device) and can include also for example an antenna and several audio components (not shown in Figs. 2 a-b). The lens 207 of the camera (and at the same time the picture taking direction) is oriented to the direction of an arrow 208 in Fig. 2 a (first position). In Fig. 2 b the lens 207 of the camera is oriented to the direction of an arrow 209 (second position). The camera can be operated in both first and second positions. The advantage of this arrangement is that the camera module can be turned 90 degrees compared to the prior art mobile phone in Fig. 1 when the sliding cover part 203 is closed (Fig. 2 a). This makes it possible to manufacture of a slimmer electronic communication device 201 with a prior art type camera module because the thickness of the camera module in the picture taking direction is not restricting the thickness of the whole electronic communication device. Furthermore having the camera in the length of the electronic communication device also gives the possibility to have camera with an optical zoom without increasing the width or the thickness of the electronic communication device. The length is inevitably increased but that is not so critical a dimension.

When the sliding cover part 203 slides out it turns at the same time the dynamic multifunctional module 206 from the first position (Fig. 2 a) to the second position (Fig. 2b). It thus comprises means for changing the direction of the module in relation to the main body part 202. The turning is arranged around the hinge 205 which is situated at the top and outer corner 210 of the main body part 202. In this second position of the Fig. 2 b the orientation of the camera module (and at the same time the whole dynamic multifunctional module 206) can be turned even over 90 degrees, if necessary. In the solution presented in Figs. 2 a-b the turning angle 211 is about 45 degrees from first position (Fig. 2a) to the second position (Fig. 2b). The turning angle 211 can be adjusted by arranging different sized projections to the adjacent corner 212 of the hinge 205 of the dynamic multifunctional module 206 (not shown in Figs. 2a-b).

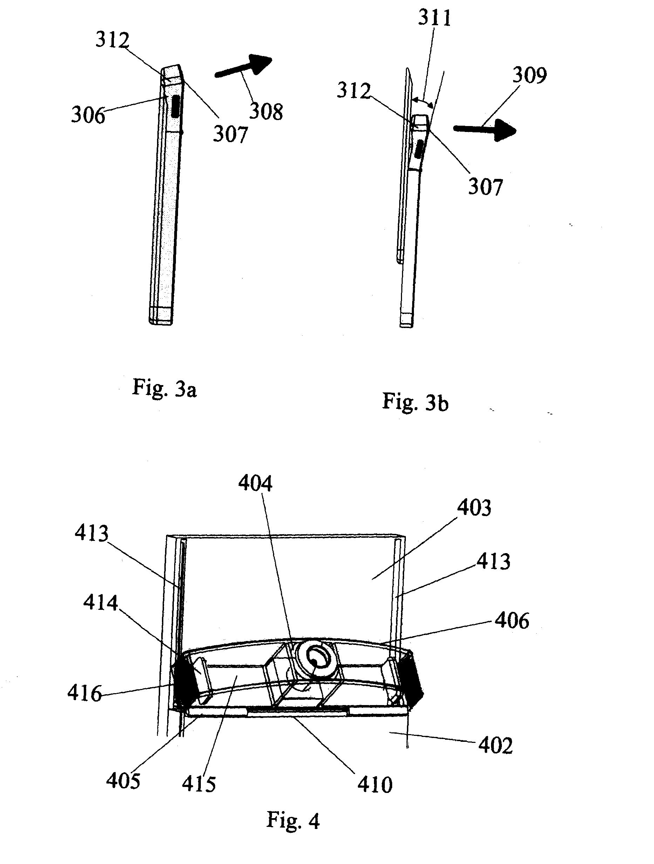

In Figs. 3 a-b the camera module is situated to the thicker part (the far end part) 312 of the dynamic multifunctional module 306. By this arrangement is avoided stacking the camera module and display module to the top of each other. The lens 307 of the camera (and picture taking direction) is oriented to the direction of an arrow 308 in Fig. 3 a (first position). In Fig. 3 b the lens 307 of the camera is oriented to the direction of an arrow 309 (second position). The camera can be operated in both positions. The turning angle 311 of the camera is only few degrees but this arrangement makes it possibly to make slimmer electronic communication device than prior art slider phones.

In Fig. 4 is presented more specifically the arrangement of the first embodiment of the invention. The drawing is done in a partly transparent way so that the parts inside the dynamic multifunctional module 406 can be seen better. The dynamic multifunctional module 406 is in a tilted position related to the device's main body part 402 and the sliding cover part 403 extends over the dynamic multifunctional module 406. The sliding cover part 403 has guideways 413 at both sides of the sliding cover part. The hinge 405 can be clearly seen in the front corner 410 of the dynamic multifunctional module 406. The camera module 404 is situated in the middle of the dynamic multifunctional module 406. On both sides of the camera module 404 there are speakers 414, audio chambers 415 and speaker grills 416.

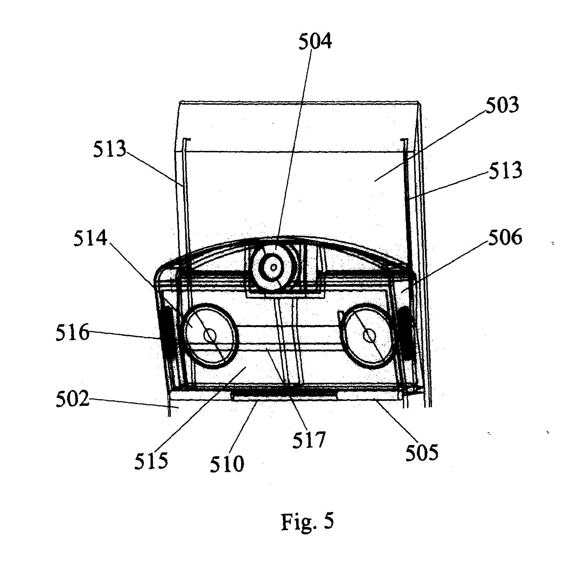

In Fig. 5 is presented more specifically the arrangement of the second embodiment of the invention. The drawing is done in a partly transparent way so that the parts inside the dynamic multifunctional module 506 can be seen better. The dynamic multifunctional module 506 is in a tilted position related to the device's main body part 502 and the sliding cover part 503 extends over the dynamic multifunctional module 506. The sliding cover part 503 has guideways 513 at both sides of the sliding cover part. The hinge 505 can be clearly seen in the front corner 510 of the dynamic multifunctional module 506. The camera module 504 is situated in the middle of the dynamic multifunctional module 506. On both sides of the camera module 504 there are speakers 514, audio chambers 515 and speaker grills 516. Also an antenna radiator 517 is situated in the dynamic multifunctional module 506. One of the advantages of this invention is that the camera increases available space for an audio chamber and an antenna reflector.

The invention also includes a method for changing an image capturing direction of an electronic communication device presented for example in Figs. 2 a-b and 3 a-b, where a sliding body part 203 is moving in relation to main body part 202 along guideways for opening the electronic communication device 201 and at the same time the sliding body part is turning a dynamic multifunctional module 206, which dynamic multifunctional module is connected from one edge 210 to the main body part with an articulation and linked to sliding body part, from the first image capturing direction 208 to the second image capturing direction 209 around the articulation 205.

The present invention may be embodied in other specific forms without departing from its spirit or essential characteristics. The described embodiments are to be considered in all respect only as illustrative and not restrictive. The scope of the invention is, therefore, indicated by the appended claims rather than by the foregoing description. All changes that come within the meaning and range of equivalency of the claims are to be embraced within their scope. While there have been shown and described and pointed out fundamental novel features of the invention as applied to preferred embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. A dynamic multifunctional module which is joined from one edge to a main body part of an electronic communication device with an articulation and which dynamic multifunctional module is comprising an image capturing device.

2. A dynamic multifunctional module according to claim 1, wherein the dynamic multifunctional module comprises one or more of following parts: an antenna, a speaker, an audio chamber or a speaker grill.

3. An electronic communication device comprising a main body part, a sliding body part, said parts being connected together with sliding contact, and a dynamic multifunctional module, the dynamic multifunctional module being joined from one edge to the main body part with an articulation and in linked connection to the sliding body part and the dynamic multifunctional module being in a first position when the said sliding body part is in a closed position and turned by an angle around the articulation to a second position by the sliding body part when the sliding body part is moved to open position.

4. An electronic communication device according to claim 3, wherein the dynamic multifunctional module includes an image capturing device.

5. An electronic communication device according to claim 3, wherein the dynamic multifunctional module comprises one or more of following parts: an antenna, a speaker, an audio chamber or a speaker grill.

6. An electronic communication device according to claim 3, wherein the turning angle of the dynamic multifunctional module around the articulation is five to one hundred twenty degrees and advantageously thirty to ninety degrees.

7. An electronic communication device according to claim 3, wherein the electronic communication device is a mobile phone.

8. A method comprising changing an image capturing direction of an electronic communication device by moving a sliding body part in relation to a main body part along guideways for opening the electronic communication device and at the same time the sliding body part is turning a dynamic multifunctional module, which dynamic multifunctional module is connected from one edge to the main body part with an articulation and linked to the sliding body part, from a first image capturing direction to a second image capturing direction around the articulation.

9. Device, comprising:
means for changing an image capturing direction of the device by moving a sliding body part in relation to a main body part along guideways for opening the device and at the same time the sliding body part turning a dynamic multifunctional module connected from one edge to the main body part with articulation means linked to the sliding body part, from a first image capturing direction to a second image capturing direction around the articulation.

10. Device comprising main body part means, sliding body part means, said part means connected together with sliding contact means, and a dynamic multifunctional means joined from one edge to the main body part with an articulation and in linked connection to the sliding body part means and the dynamic multifunctional means being in a first position when said sliding body part means is in a closed position and turned by an angle around the articulation to a second position by the sliding body part when the sliding body part is moved to an open position.

11. The device of claim 10, wherein the dynamic multifunctional means includes an image capturing device.

12. The device of claim 10, wherein the dynamic multifunctional module comprises one or more of the following parts: an antenna, a speaker, an audio chamber or a speaker grill.
